# EUROPÄISCHE PATENTSCHRIFT

(11) **EP 3 393 905 B1**
(45) Veröffentlichungstag und Bekanntmachung des Hinweises auf die Patenterteilung: **21.10.2020**
(21) Anmeldenummer: 16810356.2
(22) Anmeldetag: 13.12.2016
(51) Int. Cl.: B64D 9/00, B64F 5/50

(54) **TRANSPORTVORRICHTUNG UND VERFAHREN ZUM TRANSPORTIEREN EINER FLÜGELENDSCHEIBE IN EINEM FRACHTRAUM EINES FLUGZEUGS**
TRANSPORT DEVICE AND METHOD FOR SHIPMENT OF A WINGLET IN A AIRCRAFT CARGO COMPARTMENT
DISPOSITIF ET PROCÉDE POUR LE TRANSPORT D'UNE AILETTE DANS LE COMPARTIMENT DE FRET D'UN AÉRONEF

(30) Priorität: 23.12.2015 DE 102015226662
(43) Veröffentlichungstag der Anmeldung: 31.10.2018
(73) Patentinhaber: Lufthansa Technik AG, 22335 Hamburg (DE)
(72) Erfinder: MEHLER, Stefan, 55299 Nackenheim (DE); PALLMANN, Rouven, 66887 Föckelberg (DE)
(74) Vertreter: Müller Verweyen
(86) Internationale Anmeldenummer: PCT/EP2016/080755
(87) Internationale Veröffentlichungsnummer: WO 2017/108497

(56) Entgegenhaltungen:
- EP-A2- 2 799 344
- DE-U1- 8 907 898
- US-A- 4 050 655
- US-A1- 2011 070 061

## Beschreibung

Die vorliegende Erfindung betrifft eine Vorrichtung zum Transportieren einer Flügelendscheibe in einem Frachtraum eines Flugzeugs mit den Merkmalen des Oberbegriffs von Anspruch 1 und ein korrespondierendes Verfahren.

Eine Vielzahl moderner Flugzeuge weist heute Flügelendscheiben, auch Winglets oder Sharklets genannt, zur Minimierung des Treibstoffverbrauchs auf. Im Falle einer Beschädigung der Flügelendscheibe, beispielsweise durch eine Kollision während des Rollvorgangs des Flugzeugs, muss innerhalb kürzester Zeit eine intakte Flügelendscheibe zu dem beschädigten Flugzeug transportiert werden, um kostenintensive Bodenzeiten des Flugzeugs zu vermeiden.

Der Transport kann beispielsweise mit einem LKW oder Frachtflugzeug erfolgen, in das eine spezielle Transportkiste, die beispielsweise für den Transport von Flügelendscheiben eines verbreiteten bestimmten Flugzeugtyps vorgesehen ist, verladen wird.

Diese spezielle Transportkiste weist drei Lagerpunkte auf, die die Flügelendscheibe in einer vordefinierten Position halten. Damit die Flügelendscheibe während des Transports sicher an den Lagerpunkten gehalten wird, ist die Flügelendscheibe während des Transports durch Spanngurte gesichert. Weiter weist diese Transportkiste eine quaderförmige Grundform auf, so dass die zu transportierende Flügelendscheibe von allen Seiten geschützt ist. Durch die Quaderform nimmt die Transportkiste jedoch ein relativ großes Raumvolumen ein, so dass die Transportkiste nur in einem Frachtraum eines Großraumflugzeugs, auch Widebody oder Twin Aisle Flugzeug genannt, oder in einem LKW transportiert werden kann.

Dies ist jedoch nachteilig, denn der Transport mit dem LKW ist zeitaufwendig und kann damit zu kostenintensiven Bodenzeiten des beschädigten Flugzeugs führen. Weiter ist an dem Transport mit Großraumflugzeugen nachteilig, dass diese aufgrund einer benötigten Mindestlänge der Start- und/oder Landebahn nur bestimmte Flughäfen erreichen können.

Ein weiterer Aspekt ist, dass die meisten Flughäfen ohnehin in einer relativ hohen Frequenz durch kleinere Kurz- und/oder Mittelstreckenflugzeuge, sogenannte Narrow Body oder Single Aisle Flugzeuge, angeflogen werden, so dass es wünschenswert wäre, die Flügelendscheiben nicht nur in Großraumflugzeugen, sondern auch in kleineren Kurz- und/oder Mittelstreckenflugzeugen transportieren zu können.

DE 89 07 898 U1 offenbart eine Palette zum Anbau an Hubgeräten und zur Aufnahme von Lasten.

Es ist Aufgabe der Erfindung, eine Vorrichtung und ein Verfahren anzugeben, wodurch die Flügelendscheiben in einem Kurz-und/oder Mittelstreckenflugzeug transportiert werden können und der Verladevorgang einfach handhabbar ist.

Die Erfindung löst die Aufgabe mit den Merkmalen der unabhängigen Ansprüche.

Gemäß dem Grundgedanken der Erfindung wird eine Transportvorrichtung zum Transportieren einer Flügelendscheibe in einem Frachtraum eines Flugzeugs vorgeschlagen, aufweisend ein Grundelement mit wenigstens einem Lagerelement, wobei das Lagerelement dazu eingerichtet ist, die Flügelendscheibe gegenüber dem Grundelement in einer vordefinierten Lagerposition zu lagern, wobei ein Frachtelement vorgesehen ist, das dazu geeignet ist, eine Auflage der Transportvorrichtung an einer Bodenstruktur des Frachtraums zu bilden, wobei das Grundelement gegenüber dem Frachtelement über eine Drehverbindung drehbar gelagert ist.

Die Drehverbindung zwischen dem Frachtelement und dem Grundelement ermöglicht es, bei einem Verladen der Flügelendscheibe translatorische und rotatorische Bewegungsanteile zu überlagern. Häufig ist beispielsweise die Verladung der Flügelendscheibe in den Frachtraum eines Flugzeugs wegen der relativ kleinen Frachtraumöffnung bei geöffneter Frachttür und der Abmessungen des Frachtraums in einer rein translatorischen Bewegung nicht möglich. Folglich muss die Flügelendscheibe zusätzlich durch rotatorische Bewegungsanteile in den Frachtraum bewegt werden; dies erfolgt über eine Eindrehbewegung.

Damit dies möglich ist, muss eine vorteilhafte Drehachse gewählt werden, die vorzugsweise dezentral an dem Frachtelement und/oder dezentral an dem Grundelement angeordnet ist. Die Flügelendscheibe kann so in dem Frachtraum positioniert werden, ohne dass das Frachtelement, das die Anbindung zur Bodenstruktur des Frachtraums bildet, selbst mitrotiert werden muss, d.h. das Frachtelement vollzieht gegenüber der Bodenstruktur des Frachtraums vorzugsweise ausschließlich translatorische Bewegungen.

Eine einfache Handhabbarkeit der Flügelendscheibe während des Verladevorgangs wird insbesondere dadurch erreicht, dass die Drehverbindung dazu eingerichtet ist, eine widerstandsarme Rotationsbewegung zwischen dem Frachtelement und dem Grundelement zu ermöglichen. Es sind damit auch feine Rotationsbewegungen der von dem Grundelement gehaltenen Flügelendscheibe möglich, so dass die Flügelendscheibe innerhalb der durch die Frachtraumgeometrie sowie der Frachtraumöffnung bestimmten Bewegungsenveloppe in eine Transportposition verbracht werden kann. Das ist insbesondere deshalb vorteilhaft, weil die erfindungsgemäße Transportvorrichtung inklusive der Flügelendscheibe eine große, schwer handhabbare Masse aufweist. In Anbetracht der unhandlichen Abmessungen der Flügelendscheibe und der häufig geringen Frachtraumhöhe, die ein ergonomisches Arbeiten für das Verladepersonal erschwert, ist die Handhabbarkeit für das sichere und zeiteffiziente Verladen der Flügelendscheibe in dem Frachtraum von entscheidender Bedeutung.

Ein weiterer Vorteil der vorliegenden Erfindung ist darin zu sehen, dass die Flügelendscheibe während des gesamten Verladevorgangs von den Lagerelementen des Grundelements gehalten wird. Vorzugsweise wird die Flügelendscheibe mit Gurtbändern an den Lagerelementen verspannt, so dass die Flügelendscheibe während des gesamten Verlade- und Transportvorgangs sicher gelagert ist. Unter einem Lagerelement ist im Sinne dieser Anmeldung vorzugsweise auch eine Auflagefläche des Grundelements für die Flügelendscheibe zu verstehen.

Insgesamt kann so mit der erfindungsgemäßen Transportvorrichtung eine Flügelendscheibe in einem Kurz- und/oder Mittelstreckenflugzeug transportiert werden.

Es wird weiter vorgeschlagen, dass die Drehverbindung dazu eingerichtet ist, eine Rotationsbewegung des Grundelements gegenüber dem Frachtelement um eine vertikale Achse zu ermöglichen.

Die Rotationsbewegung um eine vertikale Achse ist deshalb vorteilhaft, weil diese aufgrund der großen länglichen Erstreckung der Flügelendscheibe und der geringen Höhe des Frachtraums eine Eindrehbewegung der Flügelendscheibe in den Frachtraum ermöglicht. Ferner ist eine Drehverbindung, die eine Rotation um eine vertikale Achse ermöglicht, konstruktiv besonderes einfach umsetzbar, da sie orthogonal zu einer Grundfläche des Grundelements verläuft. Unter einer vertikalen Achse ist eine Achse zu verstehen, die parallel zu einer Gierachse des Flugzeugs ausgerichtet ist. Unter einer parallelen Ausrichtung zweier Achsen ist im Sinne dieser Anmeldung auch eine minimale Abweichung der parallelen Ausrichtung von vorzugsweise weniger als 15° zu verstehen, weiter vorzugsweise von weniger als 10° und insbesondere vorzugsweise von weniger als 5°.

Weiter wird vorgeschlagen, dass wenigstens eine Blockiereinrichtung vorgesehen ist, mit der die Rotationsbewegung zwischen dem Grundelement und dem Frachtelement blockierbar ist.

Vorzugsweise wird die Blockiereinrichtung durch eine selbstverriegelnde Verschließeinrichtung gebildet, was bedeutet, dass eine Verriegelung erfolgt, sobald sich das Grundelement gegenüber dem Frachtelement in einer Verriegelungsposition befindet. Die Verriegelung erfolgt dann vorzugsweise dadurch, dass die Blockiereinrichtung eine Art Einrastmechanismus aufweist, der nur durch manuelle Betätigung einer Löseeinrichtung wieder freigegeben werden kann.

Weiter vorzugsweise kann die Blockiereinrichtung auch redundant ausgeführt sein, so dass die Blockiereinrichtung eine Sicherungseinrichtung aufweist. Vorzugsweise ist die Sicherungseinrichtung durch einen Verriegelungspin und entsprechende Aufnahmen des Verriegelungspins gebildet. Das bietet den Vorteil, dass im Falle eines Versagens der Verschließeinrichtung eine Rotationsbewegung des Grundelements gegenüber dem Frachtelement durch die zusätzliche Sicherungseinrichtung, also dem Verriegelungspin erfolgt.

Bevorzugt ist die Blockiereinrichtung dazu eingerichtet, das Grundelement gegenüber dem Frachtelement in wenigstens einer vordefinierten Rotationsstellung zu blockieren.

Vorzugsweise ist das Grundelement gegenüber dem Frachtelement in einer ersten Rotationsposition verriegelbar, die das Grundelement gegenüber dem Frachtelement zu Beginn des Verladevorgangs einnimmt.

Weiter vorzugsweise ist das Grundelement gegenüber dem Frachtelement in einer zweiten Rotationsposition verriegelbar, wobei diese Position während des Transports und damit auch während der Flug- und Rollphasen des Flugzeugs eingenommen wird.

Weiter vorzugsweise kann die Blockiereinrichtung mehrere Verschließeinrichtungen und/oder Sicherungseinrichtungen aufweisen, die jeweils zum Blockieren einer Rotationsbewegung des Grundelements gegenüber dem Frachtelement in einer ersten und einer zweiten Rotationsposition eingerichtet sind.

Erfindungsgemäß weist das Frachtelement ein Befestigungsmittel zum fixierenden Zusammenwirken mit dem Befestigungssystem des Flugzeugs auf.

Es wird beispielsweise durch Ösen oder andere erfindungsgemäße Befestigungsmittel, die an dem Frachtelement vorgesehen sind, ermöglicht, das Frachtelement zuverlässig innerhalb des Frachtraums zu fixieren. Es können so die ohnehin vorhandenen Befestigungsmittel des Frachtraums genutzt werden, was zu einer einfacheren und schnelleren Sicherung der Transportvorrichtung während des Verladeprozesses führt.

Vorzugsweise ragt das Grundelement in wenigstens einer Raumrichtung über einen Grundriss des Frachtelements hinaus.

Dies ermöglicht es, dass das Frachtelement so dimensioniert werden kann, dass es in einer translatorischen Bewegung in den Frachtraum geschoben und gleichzeitig auch translatorisch in Richtung einer Rollachse des Flugzeugs innerhalb des Frachtraums bewegt werden kann. Das über den Grundriss des Frachtelements hinausragende Grundelement kann dagegen so dimensioniert sein, dass es an die Größe der Flügelendscheibe angepasst ist. Das bedeutet, dass das Grundelement vorzugsweise so dimensioniert ist, dass darauf Lagerelemente angebracht werden können, die dazu dienen, die Flügelendscheibe während des Transport- und des Verladevorgangs zuverlässig zu lagern.

Weiter vorzugsweise ist das Frachtelement durch eine Standard PKC-Palette gebildet.

Bei einer PKC-Palette handelt es sich um eine Standardpalette, die üblicherweise für den Transport von Luftfracht in dem Frachtraum eines Flugzeugs verwendet wird. Durch die Verwendung der PKC-Palette wird sichergestellt, dass die Transportvorrichtung in translatorischer Richtung innerhalb des Frachtraums verschoben sowie durch einen Standardhubwagen beim Verladen auf die Höhe des Frachtraums bewegt werden kann.

Weiter ist es vorteilhaft, wenn eine Außenkontur des Grundelements in einer horizontalen Ebene größer ist als eine vertikale Projektion der eingesetzten Flügelendscheibe in die horizontale Ebene des Grundelements.

Während des Verladevorgangs der erfindungsgemäßen Transportvorrichtung muss aufgrund der Größe der Flügelendscheibe und der geringen Abmessungen des Frachtraums eine genau abgestimmte Bewegungsfolge zwischen rotatorischen und translatorischen Bewegungen erfolgen, damit die Flügelendscheibe nicht mit einer Wand des Frachtraums kollidiert. Durch die größeren Abmessungen des Grundelements in der horizontalen Ebene käme es bei einer zu großen Verdreh- und/oder Verschiebebewegung zunächst zu einer Kollision des Grundelements mit der Wand des Frachtraums, so dass die Flügelendscheibe vor einer Kollision mit der Wand des Frachtraums geschützt ist. Ferner ist es vorteilhaft, dass auf einen die Flügelendscheibe vollständig umgebenden Schutzdeckel verzichtet werden kann.

Vorzugsweise ist das Grundelement nicht in der gesamten horizontalen Ebene größer als die vertikale Projektion der eingesetzten Flügelendscheibe, sondern nur in den Bereichen, bei denen die Gefahr der Kollision während des Verladens besonders groß ist. Vorzugsweise ist jedoch ein Großteil, also mehr als 50 % der Länge der Außenkontur bei einer vertikalen Projektion in die horizontale Ebene des Grundelements durch eine größere Außenkontur des Grundelements geschützt, weiter vorzugsweise mehr als 70 % und insbesondere vorzugsweise mehr als 80 %.

Vorzugsweise ist wenigstens ein zweites Lagerelement vorgesehen, wobei das zweite Lagerelement in einer anderen Höhe an der Flügelendscheibe angreift als das erste Lagerelement.

Durch das Angreifen der Lagerelemente in unterschiedlichen Höhen an der Flügelendscheibe kann eine schräge Lagerung der Flügelendscheibe ermöglicht werden, d.h. eine Spitze der Flügelendscheibe liegt nicht auf dem Grundelement auf, sondern ist angehoben. Durch diese schräge Lagerung wird die für die Lagerung benötigte Höhe reduziert, so dass die Flügelendscheiben eines Airbus A320 in dem Frachtraum, der bei dem Flugzeugtyp Airbus A320 eine Höhe von nur etwa 1,2 m aufweist, gelagert werden kann.

Erfindungsgemäß wird ein Verfahren zum Transportieren einer Flügelendscheibe in einem Frachtraum eines Flugzeugs unter Verwendung der erfindungsgemäßen Transportvorrichtung bereitgestellt, wobei in einem ersten Verfahrensschritt a) die Flügelendscheibe auf Frachtraumhöhe angehoben wird, und anschließend in einem zweiten Verfahrensschritt b) die Flügelendscheibe in einer translatorischen Bewegung in Richtung einer y-Achse, die parallel zu einer Nickachse des Flugzeugs ausgerichtet ist, in den Frachtraum geschoben wird, wobei anschließend in einem dritten Verfahrensschritt c) die Flügelendscheibe durch rotatorische Bewegungsanteile um eine vertikale z-Achse, die parallel zu einer Gierachse des Flugzeugs ausgerichtet ist, sowie durch translatorische Bewegungsanteile in Richtung einer x-Achse, die parallel zu einer Rollachse des Flugzeugs ausgerichtet ist, in eine Transportposition bewegt wird.

Mit den Bezeichnungen Roll-, Gier- und Nickachse wird wie üblich auf ein flugzeugfestes Koordinatensystem Bezug genommen. Das nachfolgend verwendete Koordinatensystem mit den Achsen x, y und z, dessen Ausrichtung anhand der Roll-, Gier- und Nickachsen beschrieben wird, ist jedoch nicht flugzeugfest, sondern als transportvorrichtungsfest anzusehen, wobei die z-Achse stets mit der Rotationsachse der Drehverbindung zusammenfällt.

Aufgrund der großen Abmessungen der Flügelendscheibe und der geringen Abmessungen des Frachtraums sowie der Frachtraumöffnung ergibt sich für den Verladevorgang der Flügelendscheibe eine enge Bewegungsenveloppe. Das bedeutet, dass der in dem Frachtraum verfügbare Raum bestmöglich ausgenutzt werden muss, um die Flügelendscheibe zu verladen. Zunächst wird die Flügelendscheibe vorzugsweise durch einen Hubwagen auf die Frachtraumhöhe bewegt, was bedeutet, dass die Unterkante der Flügelendscheibe auf Höhe einer Bodenstruktur des Frachtraums angehoben wird, so dass die Flügelendscheibe zumindest teilweise in einer translatorischen Bewegung entlang der Richtung der y-Achse in den Frachtraum bewegt werden kann. Vorzugsweise wird dabei das Ende der Flügelendscheibe, das mit einer Tragfläche des Flugzeugs verbindbar ist, zuerst in den Frachtraum bewegt.

Da sich die Flügelendscheibe durch diese translatorische Bewegung nicht vollständig in den Frachtraum des Flugzeugs bewegen lässt, folgt nun eine Kombination von translatorischen mit rotatorischen Bewegungsanteilen, bis sich die Flügelendscheibe in der finalen Transportposition befindet. Durch diese erfindungsgemäße Bewegungsabfolge wird erreicht, dass die Flügelendscheiben bestimmter Flugzeugmuster, beispielsweise die des Flugzeugtyps Airbus A320, auch in einem Frachtraum sogenannter Schmalrumpfflugzeuge transportiert werden können. Das zur Verfügung stehende Ladevolumen wird damit bestmöglich ausgenutzt.

Es wird weiter vorgeschlagen, dass in dem Verfahrensschritt c) eine translatorische Bewegung in Richtung der x-Achse von wenigstens 1 m erfolgt.

Weiter vorzugsweise erfolgt eine translatorische Bewegung von wenigstens 1,4 m, insbesondere vorzugsweise von etwa 1,7 m in Richtung der x-Achse bzw. der Rollachse des Flugzeugs. Vorzugsweise erfolgt diese translatorische Bewegung der Transportvorrichtung in Flugrichtung, also nach vorne. Dadurch bewegt sich auch die Drehverbindung entlang der Rollachse des Flugzeugs. Nur wenn eine ausreichende translatorische Verschiebung des Drehpunkts entlang der Rollachse vollzogen wird, kann die Flügelendscheibe auch ausreichend in den Frachtraum eingedreht werden, so dass die Flügelendscheibe vollständig innerhalb des Frachtraums transportiert werden kann.

Vorzugsweise überlagern sich die rotatorischen Bewegungsanteile um die z-Achse und die translatorischen Bewegungsanteile in Richtung x-Achse zeitlich.

Die Abmessungen des Frachtraums erfordern es, dass sich die translatorischen und die rotatorischen Bewegungsanteile während des Verfahrensschrittes c) überlagern, damit die Flügelendscheibe nicht mit der Wand des Frachtraums kollidiert. Das bedeutet, dass während der translatorischen Bewegung auch eine rotatorische Bewegung erfolgt.

Im Sinne dieser Anmeldung ist jedoch auch unter dem wechselweise Hintereinanderreihen von translatorischen und rotatorischen Bewegungsanteilen eine zeitliche Überlagerung der Bewegungsanteile zu verstehen, wobei diese Bewegungsanteile im Vergleich zu der Gesamtbewegung bis zum Erreichen der Transportposition klein sein müssen, d.h. die wechselweise hintereinander gereihten Bewegungsanteile dürfen vorzugsweise maximal 20 % der Gesamtbewegung ausmachen, weiter vorzugsweise weniger als 10 % der Gesamtbewegung und insbesondere vorzugsweise weniger als 5 % der Gesamtbewegung. Geht man von einer translatorischen Bewegung von insgesamt 1,4 m und einer Gesamtrotation von 70° aus, so würde vorzugsweise spätestens nach einer rotatorischen Bewegung von 14° eine translatorische Bewegung von maximal 28 cm folgen.

Weiter wird vorgeschlagen, dass der Rotationswinkel der Flügelendscheibe um die z-Achse insgesamt zwischen 50° und 90° beträgt. Es wird damit ein ausreichend großes Eindrehen der Flügelendscheibe in den Frachtraum erreicht.

Durch die Verwendung der erfindungsgemäßen Transportvorrichtung für das Durchführen des Verladeverfahrens kann eine einfache Handhabbarkeit während des Verladens sichergestellt werden. Weiterhin wird eine sichere Lagerung der Flügelendscheibe während des gesamten Verladevorgangs und auch während des Transportvorgangs sichergestellt.

Weiterhin ist es vorteilhaft, wenn in einem Verfahrensschritt d), der nach dem Verfahrensschritt c) durchgeführt wird, eine Rotationsbewegung zwischen dem Grundelement und dem Frachtelement blockiert wird.

Damit ist sichergestellt, dass sich die Flügelendscheibe während des Transports, d.h. während sämtlicher Flug- und Rollphasen, nicht mehr gegenüber dem Frachtelement rotatorisch bewegen kann, so dass ein ungewolltes Verdrehen der Flügelendscheibe verhindert werden kann. Es wird so auch eine Kollision der Flügelendscheibe mit der Wand des Frachtraums verhindert, so dass sowohl Beschädigungen an der Flügelendscheibe als auch Beschädigungen an der Wand des Frachtraums selbst verhindert werden. Insgesamt wird dadurch ein sicherer Transport der Flügelendscheiben gewährleistet.

Die Erfindung wird im Folgenden anhand bevorzugter Ausführungsformen unter Bezugnahme auf die beigefügten Figuren erläutert. Dabei zeigt
- Fig. 1: Eine Transportvorrichtung in einer Verladeposition aus zwei Perspektiven;
- Fig. 2: eine Transportvorrichtung mit einer ersten Ausführungsform einer Blockiereinrichtung;
- Fig. 3: eine Transportvorrichtung in einer zweiten Ausführungsform einer Blockiereinrichtung;
- Fig. 4: eine Detailansicht eines Drehlagerelements;
- Fig. 5: eine Detailansicht der Befestigung eines Drehlagerelements an dem Frachtelement;
- Fig. 6: eine Flügelendscheibe nach einem translatorischen Einfahren in einen Frachtraum in Richtung einer y-Achse in einer perspektivischen Ansicht;
- Fig. 7: eine Flügelendscheibe kurz vor Erreichen einer Transportposition in einer perspektivischen Ansicht;
- Fig. 8: eine Flügelendscheibe in einer Transportposition in einer ersten Ansicht;
- Fig. 9: eine Flügelendscheibe in einer Transportposition in einer zweiten Ansicht;
- Fig. 10: eine Flügelendscheibe in einer Transportposition in einer dritten Ansicht; und
- Fig. 11: eine Flügelendscheibe in einer Transportposition in einer vierten Ansicht.

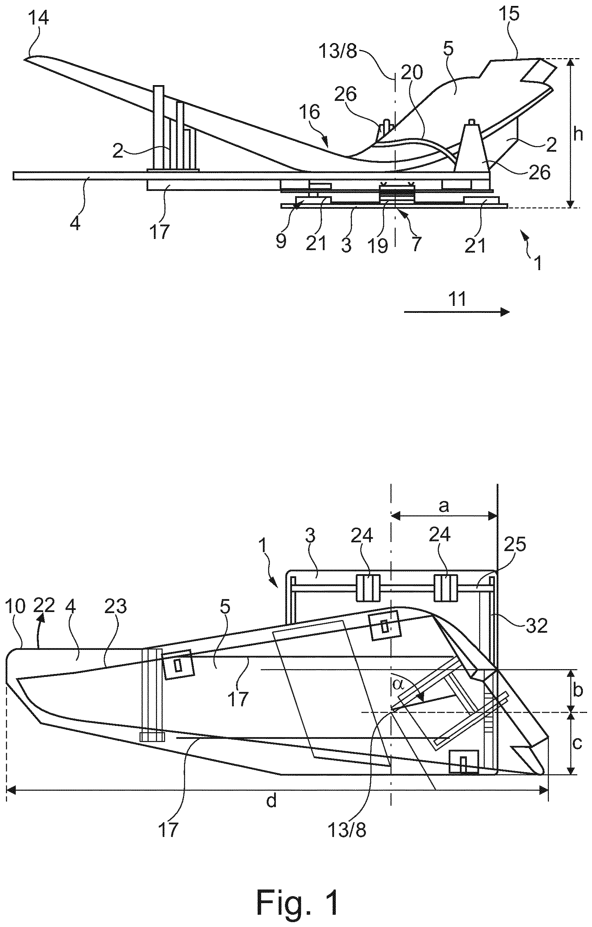

Figur 1, oben, zeigt eine erfindungsgemäße Transportvorrichtung 1 zum Transportieren einer Flügelendscheibe 5 eines Schmalrumpfflugzeugs vom Typ Airbus A320 in einem Flugzeug desselben Typs. Grundsätzlich ist die erfindungsgemäße Lösung jedoch nicht auf diese Flügelendscheibe 5 und/oder auf den Transport in diesem Flugzeugtyp beschränkt. Es ist vielmehr möglich, die erfindungsgemäße Lösung für beliebige Flügelendscheiben 5 und/oder den Transport in beliebigen Flugzeugtypen anzuwenden, sofern die Flügelendscheibe 5 zumindest theoretisch in einem vorgesehenen Frachtraum 6 verstaut werden kann.

Die in Figur 1, oben, gezeigte erfindungsgemäße Transportvorrichtung 1 umfasst ein Frachtelement 3, ein Grundelement 4, mehrere Lagerelemente 2 und eine Drehverbindung 7. Die Transportvorrichtung 1 befindet sich in dieser Darstellung in einer ersten Rotationsposition, d.h. das Grundelement 4 ist gegenüber dem Frachtelement 3 so ausgerichtet, dass zunächst ein translatorisches Einschieben der Transportvorrichtung 1 in Richtung einer y-Achse 11, die parallel zu einer Nickachse 11 des Flugzeugs ausgerichtet ist, möglich ist. In dieser ersten Rotationsposition wird die Transportvorrichtung 1 vorzugsweise auch auf Höhe des Frachtraums 6 angehoben.

Die Lagerelemente 2 dienen dazu, die Flügelendscheibe 5 eines Flugzeugs in einer vordefinierten Position auf dem Grundelement 4 zu lagern. Dabei liegen die Lagerelemente 2 in unterschiedlichen Höhen an der Flügelendscheibe 5 an. Es wird dadurch eine schräge Lagerung der Flügelendscheibe 5 auf dem Grundelement 4 ermöglicht, was bedeutet, dass eine Spitze 14 der Flügelendscheibe 5 in einem gewissen Abstand zu dem Grundelement 4 gelagert ist. Ebenso ist eine Verbindungsstelle 15 der Flügelendscheibe 5, die zur Anbindung an einer Tragfläche des Flugzeugs eingerichtet ist, in einem gewissen Abstand zu dem Grundelement 4 gelagert. Folglich liegt die Flügelendscheibe 5 ausschließlich in einem gebogenen Übergangsbereich 16 zwischen der Flügelspitze 14 und der Verbindungsstelle 15 auf dem Grundelement 4 auf. Durch diese Art der Lagerung kann eine Höhe h der Transportvorrichtung 1 inklusive der Flügelendscheibe 5 minimiert werden; vorzugsweise ist die Höhe h kleiner als 1,2 m.

Weiter zeigt Figur 1, oben, dass die Flügelendscheibe 5 mit wenigstens einem Spanngurt 20 an dem Grundelement 4 bzw. an den Lagerelementen 2 gesichert ist, was der sicheren Befestigung der Flügelendscheibe 5 an der Transportvorrichtung 1 dient. Die Befestigung des Spanngurts 20 an dem Grundelement 4 erfolgt über wenigstens einen Spanngurtträger 26, der vorzugsweise an dem Grundelement 4 angeordnet ist.

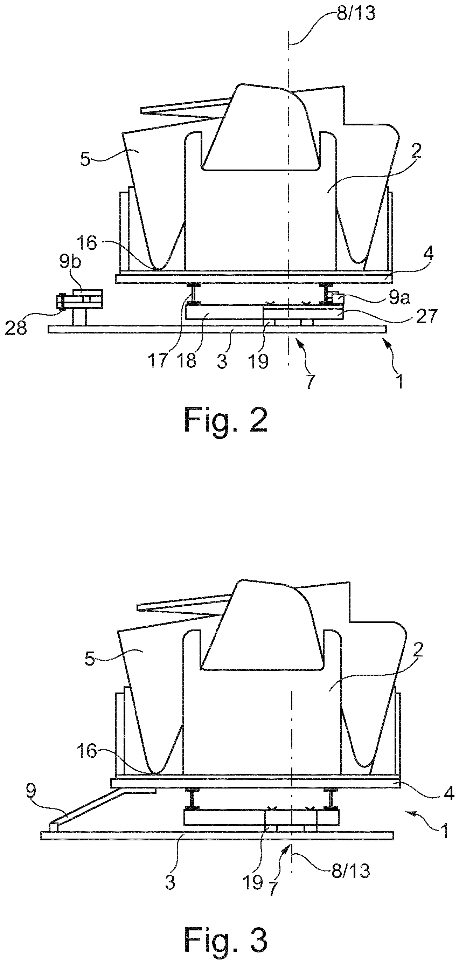

Zur Stabilisierung des Grundelements 4 ist an dessen Unterseite ein Längsträger 17 vorgesehen. Der Längsträger 17 ist wiederum mit einem in der Figur 1 nicht gezeigten Querträger 18 verbunden, der jedoch in Figur 2 dargestellt ist. Der Querträger 18 ist über ein vorzugsweise um 360° drehbares Drehlagerelement 19 mit dem Frachtelement 3 verbunden. Der Längsträger 17, der Querträger 18 sowie das Drehlagerelement 19 bilden damit im Wesentlichen die Drehverbindung 7, über die das Grundelement 4 gegenüber dem Frachtelement 3 drehbar gelagert ist. Die Drehverbindung 4 ermöglicht damit eine Rotationsbewegung des Grundelements 4 gegenüber dem Frachtelement 3 um eine vertikale Achse 8, wobei diese Achse parallel zu einer Gierachse 13 des Flugzeugs ausgerichtet ist.

Ferner zeigt Figur 1, oben, schematisch, dass das Drehlagerelement 19 über ein Adapterelement 21 mit dem Frachtelement 3 drehfest verbunden ist.

Weiterhin ist eine erste Blockiereinrichtung 9 vorgesehen, die eine Rotation des Grundelements 4 gegenüber dem Frachtelement 3 verhindert. Dabei ist ein Teil der Blockiereinrichtung 9 über einen Anschlagträger 27, siehe Figur 2, drehfest mit dem Frachtelement 3 verbunden, so dass über einen Verriegelungsmechanismus eine drehfeste Verbindung zwischen dem Grundelement 4 und dem Frachtelement 3 hergestellt werden kann. Vorzugsweise ist die Blockiereinrichtung 9 dazu eingerichtet, die Rotation des Grundelements 4 gegenüber dem Frachtelement 3 in einer ersten Rotationsposition während des Verladens und in einer zweiten Rotationsposition während des Transports zu blockieren.

Figur 1, unten, zeigt eine erfindungsgemäße Transportvorrichtung 1 aus einer Draufsicht, wobei sich das Grundelement 4 und damit auch die Flügelendscheibe 5 in der ersten Rotationsposition befinden. Während des Verladevorgangs rotiert das Grundelement 4 in Richtung eines Pfeils 22 um die vertikale Achse 8. Vorzugsweise beträgt ein Rotationswinkel α um die vertikale Achse 8 zwischen 50° und 90°, weiter vorzugsweise etwa 70°.

Weiter ist der Draufsicht aus Figur 1, unten, zu entnehmen, dass eine Außenkontur 10 des Grundelements 4 in einer horizontalen Ebene über eine Außenkante 23 der Flügelendscheibe 5 hinausragt. Das Grundelement 4 bildet damit während der Rotationsbewegung um die vertikale Achse 8 einen Schutz vor einer Kollision mit einer Wand eines Frachtraums 6. Vorzugsweise kann zusätzlich an der Außenkontur 10 des Grundelements 4 ein weiteres Schutzelement, beispielsweise ein Stoßdämpfer, vorgesehen sein, so dass bei einer ungewünschten Kollision der Außenkontur 10 mit der Wand des Frachtraums 6 Energie absorbiert und damit eine Beschädigung sowohl an dem Grundelement 4 als auch an der Wand des Frachtraums 6 vermieden werden kann.

Das Drehlagerelement 19, und damit die vertikale Achse 8, ist auf dem Frachtelement 3 vorzugsweise nicht mittig angeordnet. Die vertikale Achse 8 ist damit durch einen Abstand a festgelegt, der eine erste Seitenlänge des Frachtelements 3 halbiert, so dass sich vorzugsweise ein Abstand a von etwa 78 cm ergibt. Weiter wird die Anordnung der vertikalen Achse 8 durch einen Abstand c von einer zweiten Seitenlänge des Frachtelements 3 bestimmt, wobei der Abstand c in etwa 43 cm beträgt; es ergibt sich damit eine Abweichung von der Mitte des Frachtelements 3 um den Wert b, der in etwa 35 cm beträgt. Diese Anordnung der vertikalen Achse 8 ermöglicht es, das Grundelement 4 mit der darauf befestigten Flügelendscheibe 5 in den Frachtraum 8 einzudrehen, da eine vorteilhafte, auf die Flügelendscheibe 5 eines Flugzeugs vom Typ A320 und den Frachtraum 6 dieses Flugzeugtyps abgestimmte Dreh- bzw. Einschwenkbewegung der Flügelendscheibe 5 ermöglicht wird. Eine maximale Länge d des Grundelements 4 inklusive der eingesetzten Flügelendscheibe 5 beträgt vorzugsweise etwa 4 m.

Weiter sind in der Figur 1, unten, Trägerauflagen 24 gezeigt, die als Auflage für die Längsträger 17 dienen, wenn sich das Grundelement 4 um vorzugsweise 70° in Richtung des Pfeils 22 dreht und sich damit in der zweiten Rotationsposition befindet. In Figur 1, unten, sind die Längsträger 17 nur durch Linien schematisch dargestellt. Die Trägerauflagen 24 werden mit einer Trägerarretierung 25 gehalten, die über ein standardmäßig vorgesehenes Befestigungsmittel 32 mit dem Grundelement 4 verbunden sind.

Figur 2 zeigt eine Seitenansicht der Transportvorrichtung 1 in einer ersten Rotationsposition. Es ist hier die Blockiereinrichtung 9a zu erkennen, die im verriegelten Zustand eine drehfeste Verbindung mit dem Anschlagträger 27 bildet. Der Anschlagträger 27 ist demnach mit dem Frachtelement 3 drehfest verbunden. Durch die Blockiereinrichtung 9a, die vorzugsweise durch eine selbstverriegelnde Verschließeinrichtung gebildet ist, wird das Grundelement 4 für den Verladevorgang drehfest mit dem Frachtelement 3 verbunden. So ist gewährleistet, dass während des Anhebens der Transportvorrichtung 1 auf Höhe des Frachtraums 6, was vorzugsweise über einen Hubwagen erfolgt, und während des translatorischen Einschiebens der Transportvorrichtung 1 in den Frachtraum 6 eine ungewünschte Rotationsbewegung des Grundelements 4 bzw. der Flügelendscheibe 5 verhindert wird. Damit während des weiteren Verladeprozesses die Einschwenkbewegung der Flügelendscheibe 5 realisiert werden kann, ist die Blockiereinrichtung 9a derart ausgeführt, dass die drehfeste Verbindung zwischen dem Grundelement 4 und dem Frachtelement 3 auf einfache Weise, beispielsweise über einen per Hand betätigbaren Hebel, lösbar ist.

Vorzugsweise ist eine weitere Blockiereinrichtung 9a vorgesehen, die dazu eingerichtet ist, eine Rotation des Grundelements 4 gegenüber dem Frachtelement 3 in einer zweiten Rotationsposition zu blockieren.

Weiter zeigt Figur 2 eine weitere Blockiereinrichtung 9b, die ebenfalls dazu dient, das Grundelement 4 gegenüber dem Frachtelement 3 drehfest zu arretieren. Hierfür ist vorzugsweise ein Verriegelungspin 28 vorgesehen, der in einer Transportposition eine drehfeste Verbindung mit dem Grundelement 4 oder der Drehverbindung 7 bilden kann. Die Blockiereinrichtung 9b bildet damit eine redundante Sicherungseinrichtung zur Vermeidung der Rotationsbewegung zwischen dem Grundelement 4 und Frachtelement 3 während des Transports und damit während sämtlicher Flug- und Rollphasen des Flugzeugs.

Figur 3 zeigt eine im Wesentlichen identische Abbildung der Transportvorrichtung 1 wie Figur 2, wobei hier lediglich eine Blockiereinrichtung 9 vorgesehen ist, die eine drehfeste Verbindung zwischen dem Grundelement 4 und dem Frachtelement 3 über einen Verriegelungshebel herstellt.

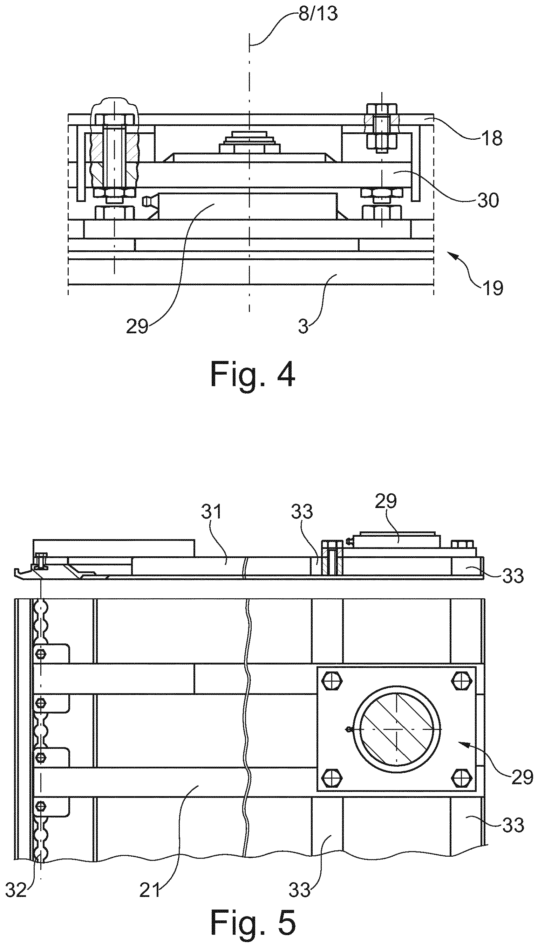

Weiter zeigt Figur 4 eine Detailansicht des Drehlagerelements 19. Das Drehlagerelement 19 umfasst ein rotationsfestes Teilelement 29, das mit dem Frachtelement 3 drehfest über Befestigungsmittel, vorzugsweise über Schrauben, verbunden ist sowie ein rotierbares Teilelement 30, das gegenüber dem rotationsfesten Teilelement 29 drehbar gelagert ist. Weiter ist das rotierbare Teilelement 30 über weitere Befestigungsmittel mit dem Querträger 18 verbunden, der wiederum über die Längsträger 17 mit dem Grundelement 4 verbunden ist.

Figur 5 zeigt die Anbindung des rotationsfesten Teilelements 29 des Drehlagerelements 19 an das Frachtelement 3. Das rotationsfeste Teilelement 29 ist über das Adapterelement 21 mit dem Frachtelement 3 verbunden, wobei das Frachtelement 3 vorzugsweise durch eine PKC-Palette gebildet ist. Vorzugsweise überragt der Grundriss des Grundelements 4 den Grundriss der PKC-Palette.

Die Anbindung des Adapterelements 21 an das Frachtelement 3 erfolgt über das standardmäßig an dem Frachtelement 3 vorgesehene Befestigungsmittel 32, das vorzugsweise durch eine Lochschiene gebildet ist. Das Adapterelement 21 selbst ist im Wesentlichen durch Längsstreben gebildet, die über Versteifungen 33 stabilisiert werden.

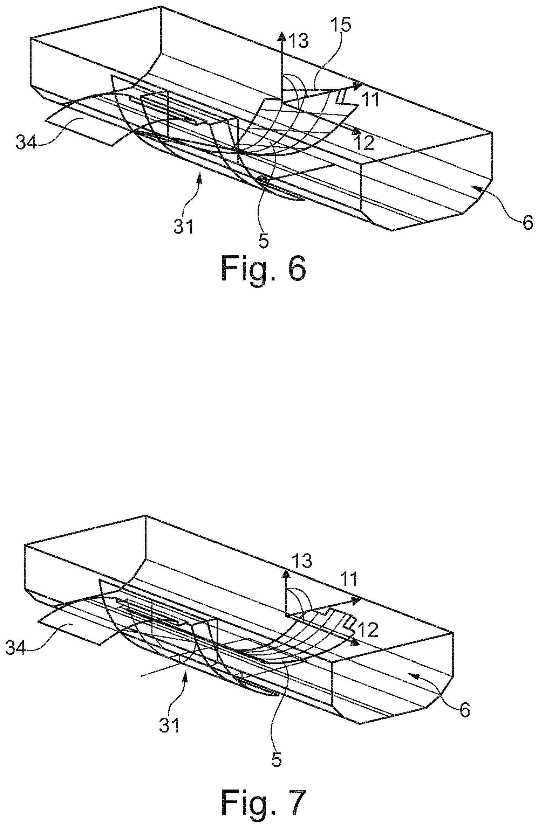

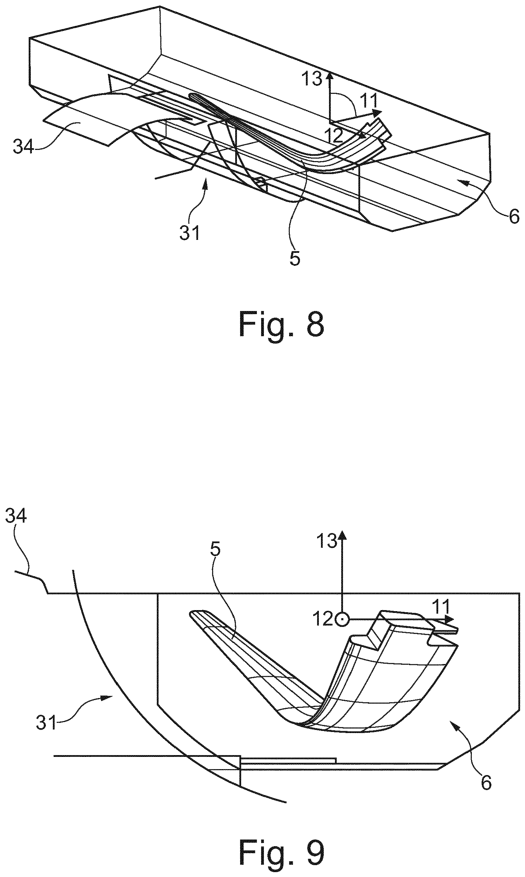

Weiter zeigen die Figuren 6 bis 8 die Verladebewegung zum Verladen der Flügelendscheibe 5 in den Frachtraum 6 aus einer initialen ersten Rotationsposition, die in Figur 6 dargestellt ist, bis in eine zweite Rotationsposition, die in Figur 8 dargestellt ist, gezeigt.

Die Figuren 6 bis 11 verzichten auf die Darstellung der erfindungsgemäßen Transportvorrichtung 1, wobei diese grundsätzlich dem Offenbarungsgehalt dieser Anmeldung bei der Beschreibung des Verladeprozesses hinzuzurechnen ist. Dabei ist zu beachten, dass die translatorischen Bewegungen der Flügelendscheibe 5 gegenüber dem Frachtraum 6 durch eine translatorische Bewegung des Frachtelements 3 gegenüber dem Frachtraum 6 umgesetzt werden und die rotatorischen Bewegungen der Flügelendscheibe 5 durch eine Rotationsbewegung des Grundelements 4 gegenüber dem Frachtelement 3.

Figur 6 zeigt die Flügelendscheibe 5 nachdem sie vorzugsweise durch einen Hubwagen auf die Höhe des Frachtraums 6 angehoben wurde und durch eine vorzugsweise ausschließlich translatorische Bewegung in Richtung der y-Achse 11 durch eine durch eine Frachtraumtür 34 verschließbare Frachtraumöffnung 31 in den Frachtraum 6 bewegt wurde. Vorzugsweise wird die Flügelendscheibe 5 so weit translatorisch in Richtung der y-Achse 11 bewegt, bis eine weitere translatorische Bewegung in diese Richtung durch die Abmessungen des Frachtraums 6 nicht mehr bzw. bis gerade noch eine Rotation um eine z-Achse 13 möglich ist, die parallel zu der Gierachse des Flugzeugs ausgerichtet ist. Die z-Achse 13 aus den Figuren 6 bis 11 fällt mit der vertikalen Achse 8 zusammen, deren Lage durch das Drehlagerelement 19 auf dem Frachtelement 3 definiert ist.

Figur 7 zeigt einen sich daran anschließenden Schritt des Verladeprozesses, wobei hier eine translatorische Bewegung der Flügelendscheibe 5 in Richtung einer x-Achse 12 erfolgt, die parallel zu einer Rollachse des Flugzeugs ausgerichtet ist. Vorzugsweise erfolgt diese translatorische Bewegung um eine Strecke zwischen 1 m und 2,4 m, weiter vorzugsweise zwischen 1,4 und 2,0 m und insbesondere vorzugsweise um etwa 1,7 m. Dieser translatorische Bewegungsanteil entlang der x-Achse wird durch einen rotatorischen Bewegungsanteil um die z-Achse 13 zeitlich überlagert. Unter einer zeitlich überlagerten Bewegung ist in diesem Sinne auch eine Bewegung zu verstehen, bei der rotatorische und translatorische Bewegungsanteile aufeinander folgen.

Der rotatorische Bewegungsanteil wird dabei so ausgeführt, dass sich die Verbindungsstelle 15 in den Frachtraum 6 hinein dreht, d.h. der rein translatorischen Bewegung in Richtung der x-Achse 12 folgt. Durch diese Überlagerung des rotatorischen mit dem translatorischen Bewegungsanteil bewegt sich auch die Rotationsachse, also die z-Achse 13, in Richtung der x-Achse 12, wodurch eine Bewegung der Flügelendscheibe 5 derart erfolgen kann, dass diese vorteilhaft in dem Frachtraum 6 verladen werden kann. Der Rotationswinkel beträgt dabei vorzugsweise zwischen 50 und 90°, weiter vorzugsweise zwischen 60 und 80° und insbesondere vorzugsweise etwa 70°. Die translatorische Bewegung der Flügelendscheibe 5 erfolgt in Richtung des Flugzeugbugs, was durch einen Richtungspfeil der x-Achse 12 in den Figuren 6 bis 11 gekennzeichnet ist.

Figur 8 zeigt die Transportposition der Flügelendscheibe 5 und damit auch die zweite Rotationsposition. In dieser Position wird die Flügelendscheibe 5 sowohl vor einer translatorischen als auch vor einer rotatorischen Bewegung gegenüber dem Frachtraum 6 gesichert. Hierzu wird zum einen das Frachtelement 3 mit den in dem Frachtraum 6 vorgesehenen Befestigungsmitteln gegen ein ungewünschtes Lösen gesichert. Weiter wird durch die Blockiereinrichtung 9 die Rotationsbewegung zwischen dem Grundelement 4 und dem Frachtelement 3 blockiert.

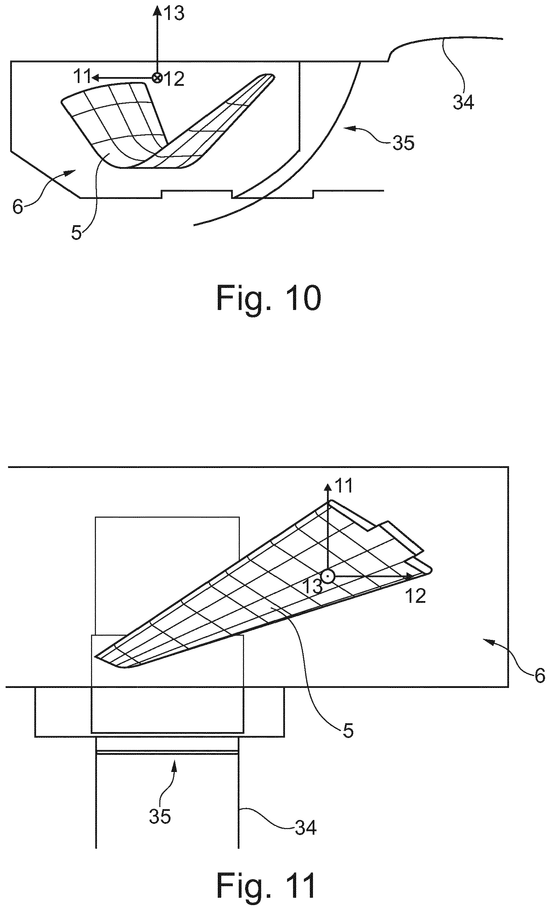

Weiter zeigen auch die Figuren 9 bis 11 die Flügelendscheibe 5 in der Transportposition. Figur 9 zeigt dabei die Transportposition mit Blick entgegen der x-Achse, d.h. mit Blick in Flugrichtung, während Figur 10 die Transportposition in entgegengesetzter Richtung zeigt. Figur 11 zeigt die Transportposition der Flügelendscheibe 5 in einer Draufsicht, d.h. mit Blick entgegen der z-Achse 13. Aus den Figuren 9 bis 11 geht damit hervor, dass durch die erfindungsgemäße Vorrichtung bzw. durch das erfindungsgemäße Verfahren die Flügelendscheibe 5 derart in dem Frachtraum 6 positioniert werden kann, dass die Raumverhältnisse des Frachtraums 6 für den Transport der Flügelendscheibe 5 vorteilhaft ausgenutzt werden können, wobei der Zugang über die Frachtraumöffnung 31 erfolgen kann.

## Patentansprüche

1. Transportvorrichtung (1) zum Transportieren einer Flügelendscheibe (5) in einem Frachtraum (6) eines Flugzeugs, aufweisend
- ein Grundelement (4) mit wenigstens einem Lagerelement (2), wobei
- das Lagerelement (2) dazu eingerichtet ist, die Flügelendscheibe (5) gegenüber dem Grundelement (4) in einer vordefinierten Lagerposition zu lagern, wobei
- die Transportvorrichtung (1) ein Frachtelement (3) umfasst, das dazu geeignet ist, eine Auflage der Transportvorrichtung (1) an einer Bodenstruktur des Frachtraums (6) zu bilden,
wobei
- das Grundelement (4) gegenüber dem Frachtelement (3) über eine Drehverbindung (7) drehbar gelagert ist und
- das Frachtelement (3) ein Befestigungsmittel zum Fixieren des Frachtelements (3) innerhalb eines Frachtraums eines Flugzeugs aufweist.

2. Transportvorrichtung (1) nach Anspruch 1, **dadurch gekennzeichnet, dass**
- die Drehverbindung (7) dazu eingerichtet ist, eine Rotationsbewegung des Grundelements (4) gegenüber dem Frachtelement (3) um eine vertikale Achse (8) zu ermöglichen.

3. Transportvorrichtung (1) nach einem der vorangehenden Ansprüche, **dadurch gekennzeichnet, dass**
- wenigstens eine Blockiereinrichtung (9) vorgesehen ist, mit der die Rotationsbewegung zwischen dem Grundelement (4) und dem Frachtelement (3) blockierbar ist.

4. Transportvorrichtung (1) nach Anspruch 3, **dadurch gekennzeichnet, dass**
- die Blockiereinrichtung (9) dazu eingerichtet ist, das Grundelement (4) gegenüber dem Frachtelement (3) in wenigstens einer vordefinierten Rotationsstellung zu blockieren.

5. Transportvorrichtung (1) nach einem der vorangehenden Ansprüche, **dadurch gekennzeichnet, dass**
- das Grundelement (4) in wenigstens einer Raumrichtung über einen Grundriss des Frachtelements (3) hinausragt.

6. Transportvorrichtung (1) nach einem der vorangehenden Ansprüche, **dadurch gekennzeichnet, dass**
- das Frachtelement (3) durch eine Standard PKC-Palette gebildet ist.

7. Transportvorrichtung (1) nach einem der vorangehenden Ansprüche und eine eingesetzte Flügelendscheibe (5), **dadurch gekennzeichnet, dass**
- eine Außenkontur (10) des Grundelements (4) in einer horizontalen Ebene größer ist als eine vertikale Projektion der eingesetzten Flügelendscheibe (5) in die horizontale Ebene des Grundelements (4).

8. Transportvorrichtung (1) nach einem der vorangehenden Ansprüche und eine eingesetzte Flügelendscheibe (5), **dadurch gekennzeichnet, dass**
- wenigstens ein zweites Lagerelement (2) vorgesehen ist,
wobei
- das zweite Lagerelement (2) in einer anderen Höhe an der Flügelendscheibe (5) angreift als das erste Lagerelement (2).

9. Verfahren zum Transportieren einer Flügelendscheibe (5) in einem Frachtraum (6) eines Flugzeugs, wobei
- in einem ersten Verfahrensschritt a) die Flügelendscheibe (5) auf Frachtraumhöhe angehoben wird, anschließend
- in einem zweiten Verfahrensschritt b) die Flügelendscheibe (5) in einer translatorischen Bewegung in Richtung einer y-Achse (11), die parallel zu einer Nickachse des Flugzeugs ausgerichtet ist, in den Frachtraum (6) geschoben wird, anschließend
- in einem dritten Verfahrensschritt c) die Flügelendscheibe (5) durch rotatorische Bewegungsanteile um eine vertikale z-Achse (13), die parallel zu einer Gierachse des Flugzeugs ausgerichtet ist, sowie durch translatorische Bewegungsanteile in Richtung einer x-Achse (12), die parallel zu einer Rollachse des Flugzeugs ausgerichtet ist, in eine Transportposition bewegt wird, **dadurch gekennzeichnet, dass**
- zur Durchführung des Verfahrens die Transportvorrichtung (1) nach einem der Ansprüche 1 bis 8 verwendet wird.

10. Verfahren nach Anspruch 9, **dadurch gekennzeichnet, dass**
- in dem Verfahrensschritt c) eine translatorische Bewegung in Richtung der x-Achse (12) von wenigstens 1 m erfolgt.

11. Verfahren nach Anspruch 9 oder 10, **dadurch gekennzeichnet, dass**
sich die rotatorischen Bewegungsanteile um die z-Achse (13) und die translatorischen Bewegungsanteile in Richtung x-Achse (12) zeitlich überlagern.

12. Verfahren nach einem der Ansprüche 9 bis 11, **dadurch gekennzeichnet, dass**
- der Rotationswinkel der Flügelendscheibe (8) um die z-Achse (13) insgesamt zwischen 50° und 90° beträgt.

13. Verfahren nach einem der Anspruch 9 bis 12, **dadurch gekennzeichnet, dass**
in einem Verfahrensschritt d), der nach dem Verfahrensschritt c) durchgeführt wird, eine Rotationsbewegung zwischen dem Grundelement (4) und dem Frachtelement (3) blockiert wird.

## Claims

1. Transport device (1) for transporting a winglet (5) in a cargo hold (6) of an aircraft, comprising
- a base element (4) comprising at least one support element (2),
wherein
- the support element (2) is configured to support the winglet (5) with respect to the base element (4) in a predefined support position, wherein
- the transport device (1) comprises a cargo element (3), which is suitable to form a support of the transport device (1) at a floor structure of the cargo hold (6), wherein
- the base element (4) is rotatably mounted with respect to the cargo element (3) via a rotary joint (7), and
- the cargo element (3) comprises a fastening means for fixing the cargo element (3) within a cargo hold of an aircraft.

2. Transport device (1) according to claim 1, **characterized in that**
- the rotary joint (7) is configured to provide for a rotational movement of the base element (4) with respect to the cargo element (3) about a vertical axis (8).

3. Transport device (1) according to any one of the preceding claims, **characterized in that**
- at least one blocking device (9) is provided, by means of which the rotational movement between the base element (4) and the cargo element (3) can be blocked.

4. Transport device (1) according to claim 3, **characterized in that**
- the blocking device (9) is configured to block the base element (4) with respect to the cargo element (3) in at least one predefined rotational position.

5. Transport device (1) according to any one of the preceding claims, **characterized in that**
- the base element (4) protrudes beyond an outline of the cargo element (3) in at least one spatial direction.

6. Transport device (1) according to any one of the preceding claims, **characterized in that**
- the cargo element (3) is formed by a standard PKC pallet.

7. Transport device (1) according to any one of the preceding claims and an inserted winglet (5), **characterized in that**
- an outer contour (10) of the base element (4) is larger in a horizontal plane than a vertical projection of the inserted winglet (5) in the horizontal plane of the base element (4).

8. Transport device (1) according to any one of the preceding claims and an inserted winglet (5), **characterized in that**
- at least a second support element (2) is provided, wherein
- the second support element (2) supports the winglet (5) in a different height than the first support element (2).

9. Method for transporting a winglet (5) in a cargo hold (6) of an aircraft, wherein
- in a first method step a), the winglet (5) is raised to cargo hold height, subsequently
- in a second method step b), the winglet (5) is pushed into the cargo hold (6) in a translatory movement in the direction of a y axis (11), which is oriented parallel to a pitch axis of the aircraft, subsequently
- in a third method step c), the winglet (5) is moved into a transport position by rotatory motions about a vertical z axis (13), which is oriented parallel to a yaw axis of the aircraft, as well as by translatory motions in the direction of an x axis (12), which is oriented parallel to a roll axis of the aircraft, **characterized in that**
- the transport device (1) according to any one of claims 1 to 8 is used to perform the method.

10. Method according to claim 9, **characterized in that**
- in method step c), a translatory movement in the direction of the x axis (12) of at least 1 m takes place.

11. Method according to claim 9 or 10, **characterized in that** the rotatory motions about the z axis (13) and the translatory motions in the direction of the x axis (12) overlap in time.

12. Method according to any one of claims 9 to 11, **characterized in that**
- the rotational angle of the winglet (8) about the z axis (13) as a whole is between 50° and 90°.

13. Method according to any one of claims 9 to 12, **characterized in that**
in a method step d), which is performed after the method step c), a rotational movement between the base element (4) and the cargo element (3) is blocked.

## Revendications

1. Dispositif de transport (1) pour transporter un aileron d'extrémité d'aile (5) dans une soute (6) d'un aéronef, présentant :
- un élément de base (4) avec au moins un élément de support (2), dans lequel
- l'élément de support (2) est conçu pour supporter l'aileron d'extrémité d'aile (5) par rapport à l'élément de base (4) dans une position de support prédéfinie, dans lequel
- le dispositif de transport (1) comprend un élément de fret (3) qui est adapté à former un appui du dispositif de transport (1) sur une structure de plancher de la soute (6), dans lequel
- l'élément de base (4) est monté de manière à pouvoir tourner par rapport à l'élément de fret (3) par l'intermédiaire d'une liaison rotative (7) et
- l'élément de fret (3) présente un moyen de fixation pour fixer l'élément de fret (3) dans une soute d'un aéronef.

2. Dispositif de transport (1) selon la revendication 1, **caractérisé en ce**
- **que** la liaison rotative (7) est conçue pour permettre un mouvement de rotation de l'élément de base (4) par rapport à l'élément de fret (3) autour d'un axe vertical (8).

3. Dispositif de transport (1) selon l'une des revendications précédentes, **caractérisé en ce**
- **qu'**au moins un moyen de blocage (9) est prévu, avec lequel le mouvement de rotation entre l'élément de base (4) et l'élément de fret (3) peut être bloqué.

4. Dispositif de transport (1) selon la revendication 3, **caractérisé en ce**
- **que** le moyen de blocage (9) est conçu pour bloquer l'élément de base (4) par rapport à l'élément de fret (3) dans au moins une position de rotation prédéfinie.

5. Dispositif de transport (1) selon l'une des revendications précédentes, **caractérisé en ce**
- **que** l'élément de base (4) fait saillie dans au moins une direction spatiale au-delà d'un tracé de l'élément de fret (3).

6. Dispositif de transport (1) selon l'une des revendications précédentes, **caractérisé en ce**
- **que** l'élément de fret (3) est formé par une palette PKC standard.

7. Dispositif de transport (1) selon l'une des revendications précédentes et un aileron d'extrémité d'aile (5) installé, **caractérisés en ce**
- **qu'**un contour extérieur (10) de l'élément de base (4) dans un plan horizontal est plus grand qu'une projection verticale de l'aileron d'extrémité d'aile (5) installé dans le plan horizontal de l'élément de base (4).

8. Dispositif de transport (1) selon l'une des revendications précédentes et un aileron d'extrémité d'aile (5) installé, **caractérisés en ce**
- **qu'**au moins un deuxième élément de support (2) est prévu, dans lequel
- le deuxième élément de support (2) agit sur l'aileron d'extrémité d'aile (5) à une hauteur différente de celle du premier élément de support (2).

9. Procédé pour transporter un aileron d'extrémité d'aile (5) dans une soute (6) d'un aéronef, dans lequel
- dans une première étape de procédé a), l'aileron d'extrémité d'aile (5) est levé à la hauteur de la soute, puis
- dans une deuxième étape de procédé b), l'aileron d'extrémité d'aile (5) est poussé dans la soute (6) par un mouvement de translation dans la direction d'un axe y (11) qui est orienté parallèlement à un axe de tangage de l'aéronef, puis
- dans une troisième étape de procédé c), l'aileron d'extrémité d'aile (5) est déplacé dans une position de transport par des composantes de mouvement de rotation autour d'un axe vertical z (13) qui est orienté parallèlement à un axe de lacet de l'aéronef et par des composantes de mouvement de translation dans la direction d'un axe x (12) qui est orienté parallèlement à un axe de roulis de l'aéronef, **caractérisé en ce**
- **que** le dispositif de transport (1) selon l'une des revendications 1 à 8 est utilisé pour exécuter le procédé.

10. Procédé selon la revendication 9, **caractérisé en ce**
- **que**, dans l'étape de procédé c), un mouvement de translation d'au moins 1 m dans la direction de l'axe x (12) est effectué.

11. Procédé selon la revendication 9 ou 10, **caractérisé en ce que** les composantes de mouvement de rotation autour de l'axe z (13) et les composantes de mouvement de translation dans la direction de l'axe x (12) se chevauchent dans le temps.

12. Procédé selon l'une des revendications 9 à 11, **caractérisé en ce**
- **que** l'angle de rotation de l'aileron d'extrémité d'aile (8) autour de l'axe z (13) est compris entre 50° et 90° au total.

13. Procédé selon l'une des revendications 9 à 12, **caractérisé en ce que**, dans une étape de procédé d), qui est exécutée après l'étape de procédé c), un mouvement de rotation entre l'élément de base (4) et l'élément de fret (3) est bloqué.
